# FASCICULE DE BREVET EUROPEEN

(11) **EP 0 742 093 B1**
(45) Date de publication et mention de la délivrance du brevet: **02.06.1999**
(21) Numéro de dépôt: 96420167.7
(22) Date de dépôt: 09.05.1996
(51) Int. Cl.: B29C 49/00, B29C 49/66, B29C 47/88

(54) **Dispositif de refroidissement pour installation de fabrication en continu de corps tubulaires en matière synthétique**
Anlagekühlvorrichtung, wobei in der Anlage kontinuierlich Hohlkörper aus Kunststoff hergestellt werden
Cooling device for a plant for continous production of thermoplastic tubular bodies

(30) Priorité: 11.05.1995 FR 9505809
(43) Date de publication de la demande: 13.11.1996
(73) Titulaire: CORELCO, 01920 Manziat (FR)
(72) Inventeur: Courant, Alain, 01190 Chavannes sur Reyssouze (FR)
(74) Mandataire: Perrier, Jean-Pierre

(56) Documents cités:
- EP-A- 0 096 957
- FR-A- 2 312 355
- US-A- 3 981 663
- US-A- 4 165 214
- US-A- 5 028 376

## Description

L'invention concerne les installations pour la fabrication en continu de corps tubulaires en matière synthétique comprenant de part et d'autre de la trajectoire d'au moins une paraison tubulaire sortant d'une extrudeuse, deux chaînes parallèles de moules faisant chacune partie d'un circuit sans fin et délimitant entre elles une empreinte en forme de tunnel.

Dans les installations de ce type, la paraison sortant de la filière est plaquée contre les empreintes des moules soit par une pression intérieure, soit par une dépression provenant d'un circuit vide alimentant les empreintes des moules. En général, le diamètre intérieur du corps, ainsi obtenu, est calibré par passage sur un cylindre axial fixé sur le nez de la filière et refroidi intérieurement par un circuit d'eau à température ambiante, ou elle-même refroidie.

Dans les installations réalisant des corps tubulaires comportant deux couches, la couche extérieure est plaquée dans l'empreinte par dépression et la couche intérieure, provenant d'une deuxième filière, est plaquée par une pression interne amenée par le nez de la deuxième filière juste avant le cylindre de refroidissement. Dans ce type d'installation, si le refroidissement de la couche extérieure est assez facile à réaliser et est bien maîtrisé, puisqu'il suffit de tremper le corps fabriqué dans un bac contenant de l'eau, celui de la couche intérieure est généralement assuré, en complément du refroidissement par le cylindre de calibrage, par un fort débit d'air frais ou glacé envoyé à l'intérieur du corps tubulaire en cours de fabrication. Cette technique de refroidissement présente l'inconvénient de consommer une grande quantité d'air, puisque celui-ci part avec le corps tubulaire. Lorsque cet air est refroidi ou est glacé, cette technique entraîne une consommation d'énergie importante. Par ailleurs, cette technique se révèle insuffisante pour assurer le refroidissement d'un corps tubulaire se déplaçant à grande vitesse linéaire et impose donc de limiter la vitesse de défilement du corps et, en conséquence, la cadence de production de l'installation.

On connaît par FR-A-2312355 un dispositif de refroidissement interne d'une paraison tubulaire cylindrique et lisse comprenant, à l'extrémité aval d'un cylindre de calibrage et de refroidissement, un ventilateur générant un circuit d'air en boucle au cours duquel l'air longe la face interne et la face externe du cylindre, en refroidissant la paraison, puis en se refroidissant au contact du cylindre. Un tube axial portant le ventilateur réduit la section de passage dans le cylindre. Ce dispositif contribue à la gélification de la matière synthétique et à son refroidissement général. En raison de la présence du ventilateur il ne peut s'appliquer qu'à des conduits de grands diamètres. Par ailleurs, sa longueur d'action est limitée, en raison des difficultés qu'éprouve l'air à circuler à contresens entre le cylindre de refroidissement et la paraison.

US-A-5028376 décrit un dispositif de refroidissement dans lequel un gaz sous pression injecté dans le col d'un venturi génère un fort débit d'air de refroidissement qui, n'étant pas recyclé, part avec le corps annulaire.

La présente invention a pour but de remédier à ces inconvénients en fournissant un dispositif de refroidissement pouvant aussi bien être utilisé dans les installations fabriquant des corps tubulaires à deux couches que dans les installations fabriquant des corps à une couche et permettant, pour une faible consommation d'air, d'obtenir un excellent refroidissement permettant d'accélérer la vitesse de production et d'augmenter le rendement de l'installation.

Ce dispositif est du type de celui décrit ci-dessus et comprenant, en complément d'un cylindre calibrant la face interne du corps annulaire, avec ou sans refroidissement, et du circuit d'air comprimé plaquant la paraison contre l'empreinte en forme de tunnel, des moyens générant dans le corps annulaire un flux d'air de refroidissement décrivant un circuit en boucle au cours duquel l'air de refroidissement longe le corps annulaire et passe dans des moyens de refroidissement .

Selon l'invention, le dispositif de refroidissement est composé d'une buse qui, disposée en bout du cylindre, est alimentée en air sous pression et débite longitudinalement une lame d'air annulaire , de faible épaisseur et débit mais de grande vitesse, entraînant l'air contenu dans le corps annulaire, et d'un tube axial s'étendant dans le corps annulaire, depuis la buse et vers l'aval, en formant le circuit de refroidissement en boucle, au moins sur la plus grande longueur de l'empreinte en forme de tunnel.

Grâce à ce dispositif, une lame d'air annulaire de faible épaisseur et de grande vitesse, mais de faible débit et constituée par de l'air refroidi ou glacé, crée, à l'intérieur du corps en cours de formation et sur la plus grande partie de la longueur de ce corps, un flux de refroidissement qui entraîne avec lui l'air contenu dans le corps. Cet air décrit un circuit en boucle au cours duquel il revient se refroidir sur l'ensemble de refroidissement avant d'être à nouveau entraîné par la lame d'air annulaire. Le faible débit d'air qui assure l'entraînement d'un volume très important, est moins onéreux à mettre en oeuvre et conduit à un refroidissement intérieur du corps tubulaire qui, bien supérieur à celui obtenu par les techniques actuelles, permet d'accroître la vitesse de défilement de ce corps, donc la production de l'installation.

Dans une forme d'exécution de l'invention, l'ensemble de refroidissement du circuit d'air de refroidissement est constitué par la partie interne d'un cylindre de calibrage et de refroidissement de la paroi interne du corps annulaire, ce cylindre étant solidaire d'une virole interne qui, axiale, cylindrique et s'étendant dans ce corps, délimite avec la face interne de ce cylindre un canal annulaire de retour de l'air et, par son extrémité amont, délimite la boucle amont du circuit d'air.

Cet agencement contribue à la formation du flux annulaire et étend le refroidissement sur la longueur nécessaire, sans limitation, c'est-à-dire l'étend sur tout ou partie de l'empreinte en forme de tunnel et voire même au delà, c'est-à-dire hors de cette empreinte.

D'autres caractéristiques et avantages ressortiront de la description qui suit en référence au dessin schématique annexé représentant, à titre d'exemple non limitatif, une forme d'exécution de ce dispositif dans le cas de son application à la fabrication de tuyaux annelés bicouches.
Figure 1 est une vue en plan par dessus de l'ensemble de l'installation,
Figure 2 est une vue partielle de face en élévation de l'extrémité aval du dispositif,
Figure 3 est une vue en coupe longitudinale du dispositif.

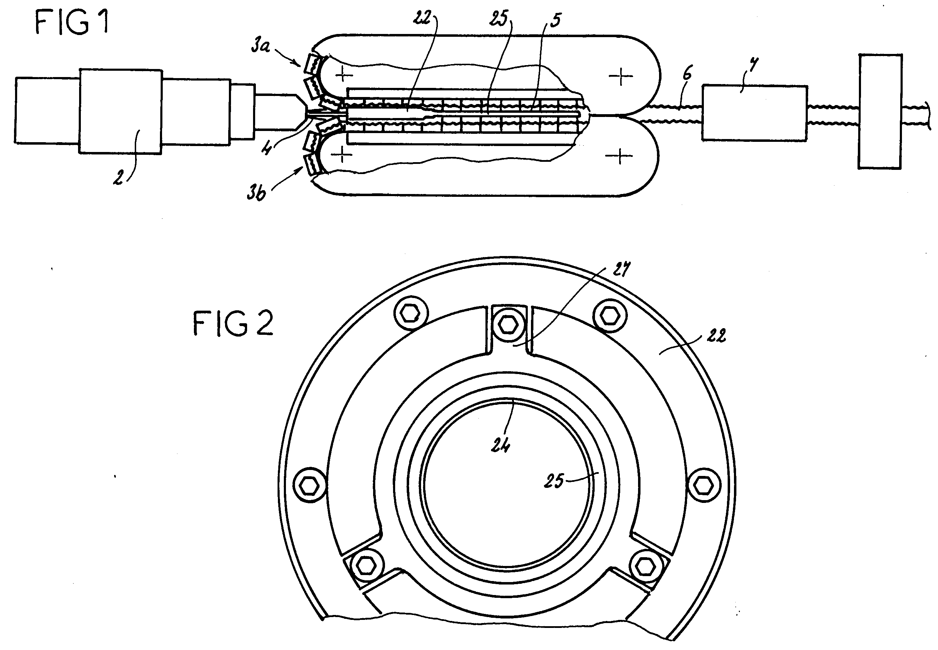

De façon connue, et comme montré à la figure 1, l'installation est composée d'au moins une extrudeuse 2 et de deux ensembles de moules 3a, 3b décrivant des trajectoires sans fin au cours desquelles deux de leurs brins parallèles, sont disposés de part et d'autre de la trajectoire de la paraison 4 sortant de l'extrudeuse 2 et délimitent, entre eux, une empreinte continue en forme de tunnel 5. A la sortie des deux ensembles 3a, 3b, le corps annulaire obtenu 6 passe à un poste de refroidissement 7 où il est trempé dans un bac contenant de l'eau, refroidie en permanence.

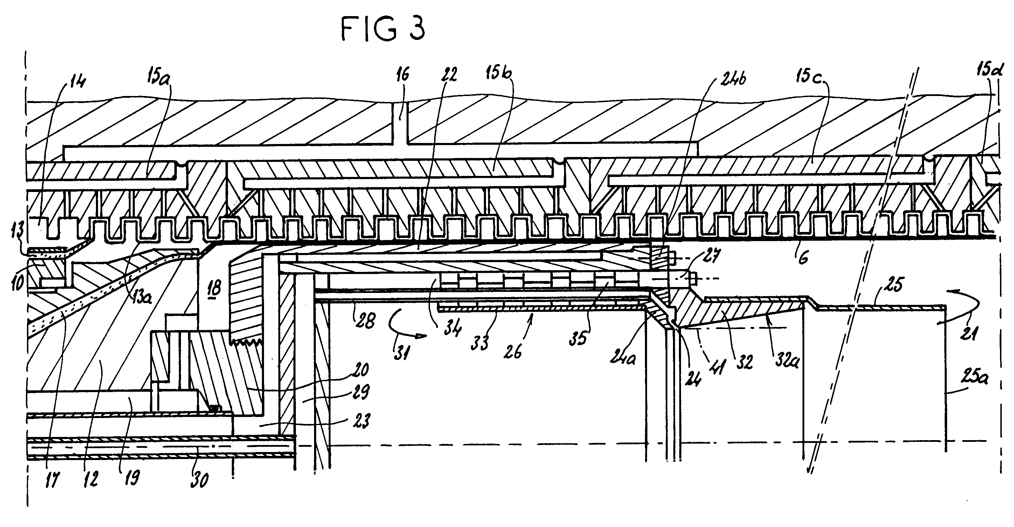

Dans la forme d'exécution représentée à la figure 3, l'installation met en oeuvre deux extrudeuses, à savoir une extrudeuse débitant dans une première filière 10, et une deuxième extrudeuse débitant dans une deuxième filière 12. La paraison 13, sortant de la filière 10, est plaquée contre les empreintes 14 de la succession de moules 15a, 15b, 15c, 15d,... par un circuit d'aspiration 16. La paraison 17 est plaquée, contre les portées cylindriques internes 13a des annelures formées par la première couche 13, par de l'air sous pression amené dans la chambre 18 par un circuit d'air 19 traversant les deux filières.

La deuxième filière 12 est solidaire d'un nez 20 sur lequel est fixé un cylindre de calibrage et de refroidissement 22, alimenté en eau refroidi par un circuit 23 traversant le nez de la filière.

Le dispositif de refroidissement selon l'invention est essentiellement composé d'une buse 24, d'un tube axial 25 et d'un ensemble de refroidissement 26.

Dans la forme d'exécution représentée, la buse 24 est délimitée entre deux bagues 24a et 24b qui sont fixées par des pattes radiales 27 sur la face en bout du cylindre de refroidissement 22. La buse est alimentée par plusieurs tubes 28 communiquant avec une chambre 29 ménagée dans la partie interne et amont du cylindre 22. La chambre 29 communique avec un circuit d'alimentation 30, en air refroidi ou glacé.

Le cylindre 22 porte également une douille 32 sur la partie extérieure de laquelle est emmanchée l'extrémité épaulée du tube axial et cylindrique 25. La figure 1 montre que ce tube s'étend sur la plus grande partie de la longueur de l'empreinte en forme de tunnel 5.

Il est précisé que, selon les besoins, la longueur de ce tube peut être réduite ou au contraire augmentée pour s'étendre au-delà des ensembles 3a et 3b, assurant l'entraînement des chaînes de moules.

La douille 32 comporte l'alésage interne 32a, tronconique, et formant divergent. La bague 24a sert à la fixation d'une virole 33, axiale et cylindrique, s'étendant à l'intérieur du cylindre de refroidissement 22 sur la plus grande partie de la longueur de celui-ci. Cette virole délimite, avec la face interne du cylindrique 22, un canal annulaire 34 constituant l'un des éléments du circuit de refroidissement et dont l'extrémité délimite la boucle amont de ce circuit.

Enfin, le cylindre de calibrage et de refroidissement 22 comporte des ailettes d'échanges thermiques 35 qui font saillies de sa paroi interne et qui s'étendent au moins sur sa partie formant le canal annulaire 34.

Lorsque l'installation est en fonctionnement, la buse 24 débite, à l'intérieur de la douille 32, une lame d'air annulaire matérialisée par le trait mixte 41. Cette lame d'air, de faible épaisseur et de grande vitesse, mais de faible débit, crée à l'intérieur du dispositif, et, dans cette forme d'exécution, à l'intérieur du tube axial 25, un flux d'aspiration qui entraîne avec lui l'air contenu dans le cylindre de refroidissement pour l'amener jusqu'à l'extrémité aval 25a du tube axial 25 formant la boucle aval du circuit. Le flux longitudinal de la buse 24 crée également, à l'intérieur du cylindre 22, un flux d'aspiration qui, par le canal annulaire 34, se répercute dans l'intervalle entre le tube 25 et le corps 6 en cours de refroidissement. Il en résulte que le flux d'air sortant du tube 25 forme une boucle 21 et revient en sens inverse dans l'intervalle entre le tube 25 et le corps 6 dont il assure le refroidissement de la paroi intérieure. Après s'être réchauffé contre cette paroi, l'ensemble du flux d'air pénètre dans le canal annulaire 34 où il se refroidit par passage contre les ailettes d'échange thermique 35. De là, il forme à nouveau une boucle 31 qui, non seulement le ramène dans la chambre interne du cylindre de refroidissement 22, mais aussi l'oriente en sens inverse pour effectuer un nouveau trajet circulaire.

Il apparaît que, grâce à la lame d'air 41 distribuée par la buse 24 et avec un débit relativement faible, il est possible d'utiliser l'ensemble du volume de l'air contenu dans le corps 6 en cours de formation et qui est de 30 à 60 fois plus important pour, en le recyclant et en le refroidissant en permanence, obtenir un refroidissement bien supérieur à celui obtenu par les dispositifs injectant un plus grand débit d'air et se perdant par absence de recirculation. Cette technique de refroidissement permet de réduire la consommation d'énergie, mais aussi d'augmenter la vitesse de déplacement annulaire des moules et, en conséquence, d'améliorer la production de l'installation.

Dans une autre forme d'exécution, la buse 24 débite entre le tube 25 et le corps tubulaire 6 en cours de fabrication. Dans ce cas, le circuit du flux de refroidissement est inversé, mais conduit aux mêmes résultats.

Par ailleurs, le dispositif décrit dans le cadre de son application à un corps annulaire bicouches peut aussi s'appliquer à la fabrication de corps monocouche ou multicouche sans sortir du cadre de l'invention.

## Revendications

1. Dispositif de refroidissement pour installation de fabrication en continu de corps annulaire en matière synthétique à partir d'au moins une paraison tubulaire (13, 18); sortant d'une extrudeuse (10, 12), et au moyen de deux chaînes parallèles de moules (15a, 15b) faisant chacune partie d'un circuit sans fin et délimitant entre elles une empreinte (5) en forme de tunnel, dispositif comprenant, en complément d'un cylindre (22) calibrant la face interne du corps annulaire (6), avec ou sans refroidissement, et du circuit d'air comprimé (19) plaquant la paraison (13) contre l'empreinte (5) en forme de tunnel, des moyens générant dans le corps annulaire un flux d'air de refroidissement décrivant un circuit en boucle au cours duquel l'air de refroidissement longe le corps annulaire et passe dans des moyens de refroidissement, comprenant une buse (24) qui, disposée en bout du cylindre (22), est alimentée en air sous pression et débite longitudinalement une lame d'air annulaire (41), de faible épaisseur et débit mais de grande vitesse, entraînant l'air contenu dans le corps annulaire (6), et d'un tube axial (25) s'étendant dans le corps annulaire (6), depuis la buse (24) et vers l'aval, en formant le circuit de refroidissement en boucle, au moins sur la plus grande longueur de l'empreinte en forme de tunnel (5)

2. Dispositif selon la revendication 1, **caractérisé en ce que** l'ensemble de refroidissement (26) du circuit d'air de refroidissement est constitué par la partie interne du cylindre (22) de calibrage et de refroidissement de la paroi interne du corps annulaire (6), ce cylindre (22) étant solidaire d'une virole interne (33) qui, axiale, cylindrique et s'étendant sur une partie de sa longueur, délimite, avec la face interne de ce cylindre (22), un canal annulaire (34) de retour de l'air et, par son extrémité amont, la boucle amont (31) du circuit d'air.

3. Dispositif selon la revendication 2, **caractérisé en ce que** le cylindre de refroidissement (22) comporte des ailettes d'échange thermique (35) saillant de sa paroi interne et réparties au moins sur sa partie formant le canal annulaire (34) de retour de l'air.

4. Dispositif selon l'une quelconque des revendications 1 à 3, **caractérisé en ce que** la buse annulaire (24) débite à l'intérieur du tube axial (25).

5. Dispositif selon l'une quelconque des revendications 1 à 3, **caractérisé en ce que** la buse annulaire (24) débite à l'extérieur du tube axial (25).

## Claims

1. Cooling device for a plant for continuous production of an annular body of synthetic material from at least one tubular parison (13, 18) exiting from an extruder (10, 12) and by means of two parallel chains of moulds (15a, 15b) each forming part of an endless circuit and delimiting between them a cavity (5) in the form of a tunnel, said device comprising, in addition to a cylinder (22) sizing the inner face of the annular body (6), with or without cooling, and to the compressed-air circuit (19) pressing the parison (13) against the cavity (5) in the form of a tunnel, means generating in the annular body a cooling-air flow describing a looped circuit in the course of which the cooling air runs along the annular body and passes into cooling means, comprising a nozzle (24) which is arranged at the end of the cylinder (22), is fed with air under pressure and discharges longitudinally an annular air jet (41), of low thickness and flow rate but high velocity, entraining the air contained in the annular body (6), and of [sic] an axial tube (25) extending in the annular body (6), from the nozzle (24) and downstream, at least over the greatest [sic] length of the cavity in the form of a tunnel (5), while forming the looped cooling circuit.

2. Device according to Claim 1, characterized in that the cooling assembly (26) of the cooling-air circuit consists of the inner part of the cylinder (22) for sizing and cooling the inner wall of the annular body (6), this cylinder (22) being united with an inner ferrule (33) which, being axial, cylindrical and extending over part of its length, delimits, with the inner face of this cylinder (22), an annular air-return channel (34) and, by its upstream end, the upstream loop (31) of the air circuit.

3. Device according to Claim 2, characterized in that the cooling cylinder (22) includes heat-exchange fins (35) projecting from its inner wall and distributed at least over its part forming the annular air-return channel (34).

4. Device according to any one of Claims 1 to 3, characterized in that the annular nozzle (24) discharges to the inside of the axial tube (25).

5. Device according to any one of Claims 1 to 3, characterized in that the annular nozzle (24) discharges to the outside of the axial tube (25).

## Patentansprüche

1. Kühlvorrichtung für eine Einrichtung zur kontinuierlichen Herstellung von ringförmigen Kunststoffkörpern ausgehend von wenigstens einem rohrförmigen Vorformling (13, 18), der aus einem Extruder (10, 12) austritt, und mittels zweier paralleler Ketten von Formkörpern (15a, 15b), die jeweils Teil einer Endlosanordnung sind und zwischen sich eine tunnelförmige Vertiefung (5) begrenzen, wobei die Vorrichtung zusätzlich zu einem die Innenfläche des ringförmigen Körpers (6) eichenden Zylinders (22) mit oder ohne Kühlung und einem Kreislauf (19) von Druckluft, welche den Vorformling (13) gegen die tunnelförmige Vertiefung (5) drückt, Mittel umfaßt, die im ringförmigen Körper einen Kühlluftstrom erzeugen, welcher eine Schleifenanordnung beschreibt, in deren Verlauf die Kühlluft am ringförmigen Körper vorbeifließt und in eine Kühlvorrichtung eintritt, umfassend eine am Ende des Zylinders (22) angeordnete Düse (24), die mit Druckluft versorgt ist und in Längsrichtung einen ringförmigen Luftstreifen (41) mit geringer Dicke und geringem Durchsatz, aber hoher Geschwindigkeit liefert, welcher die im ringförmigen Körper (6) enthaltene Luft mitnimmt, und ferner umfassend ein axiales Rohr (25), das sich von der Düse (24) ausgehend stromabwärts im ringförmigen Körper (6) wenigstens über den größten Teil der Länge der tunnelförmigen Vertiefung (5) erstreckt, wobei es den schleifenförmigen Kühlkreislauf bildet.

2. Vorrichtung nach Anspruch 1, **dadurch gekennzeichnet**, daß die Kühlgruppe (26) des Kühlluftkreislaufs durch den Innenteil des Zylinders (22) zur Eichung und zur Kühlung der Innenwand des ringförmigen Körpers (6) gebildet ist, welcher Zylinder (22) mit einem axialen zylindrischen inneren Ring (33) verbunden ist, der sich über einen Teil seiner Länge erstreckt und mit der Innenfläche dieses Zylinders (22) einen ringförmigen Luft-Rückkehrkanal (34) und mit seinem stromaufwärts gelegenen Ende die stromaufwärts gelegene Schleife (31) des Luftkreislaufs begrenzt.

3. Vorrichtung nach Anspruch 2, **dadurch gekennzeichnet**, daß der Kühlzylinder (22) Wärmetauscherrippen (35) umfaßt, die von seiner Innenwand vorstehen und wenigstens über seinen den ringförmigen Luft-Rückkehrkanal (34) bildenden Teil verteilt sind.

4. Vorrichtung nach einem der Ansprüche 1 bis 3, **dadurch gekennzeichnet,** daß die ringförmige Düse (24) in den Innenraum des axialen Rohrs (25) mündet.

5. Vorrichtung nach einem der Ansprüche 1 bis 3, **dadurch gekennzeichnet**, daß die ringförmige Düse (24) in den Außenraum des axialen Rohrs (25) mündet.
